Europäisches Patentamt

(19) European Patent Office

Office européen des brevets

(11) Veröffentlichungsnummer: **0 187 915**

**A1**

(12) # EUROPÄISCHE PATENTANMELDUNG

(21) Anmeldenummer: 85114539.1

(22) Anmeldetag: 15.11.85

(51) Int. Cl.⁴: **B 01 L 3/00**

(30) Priorität: 16.01.85 CH 196/85

(43) Veröffentlichungstag der Anmeldung:
23.07.86 Patentblatt 86/30

(84) Benannte Vertragsstaaten:
AT BE CH DE FR GB IT LI NL SE

(71) Anmelder: **CONTRAVES AG**
**Schaffhauserstrasse 580**
**CH-8052 Zürich(CH)**

(72) Erfinder: **Zemp, Georg**
**Friedheimstrasse 26**
**CH-8057 Zürich(CH)**

(54) Anschlussvorrichtung zum Ein- und Ableiten eines Wärmeträgermediums in eine Laborreaktor-Anlage.

(57) Es wird eine Anschlussvorrichtung für eine chemische Laborreaktor-Anlage (100) mit einem zur Aufnahme eines Reaktors (10) ausgebildeten Behälter (15) vorgeschlagen. An dem Behältermantel sind im Abstand zueinander angeordnete Stutzen mit kugelförmigem Anschlussteil zum Verbinden mit einer Medium-Zu- und Ableitung vorgesehen.

Zwischen jedem Stutzen (20) und einem zugeordneten, ortsfesten Lagerelement (45) ist ein Verbindungsorgan (35) angeordnet, welches mittels einem Faltenbalg (38) axial verstellbar und an dem Anschlussteil (19) des Stutzens schwenkbar gelagert ist, so dass die an den aus verschiedenen Materialien (Glas, Metall) mit unterschiedlichen Ausdehnungskoeffizienten bestehenden Teile wirkenden Spannungen eliminiert werden.

In der Mediumzuleitung ist ferner eine in bezug auf eine Oeffnung (12') einstellbare Düsenleitung (30) integriert, die eine turbulent aufsteigende Einleitung des Mediums in einen Zwischenraum (12) gewährleistet.

FIG. 1

Anschlussvorrichtung zum Ein- und Ableiten eines Wärmeträgermediums in eine Laborreaktor-Anlage

Die Erfindung betrifft eine Anschlussvorrichtung zum
Ein- und Ableiten eines Wärmeträgermediums in eine Laborreaktor-Anlage, welche Anlage einen zur Aufnahme
eines Reaktors ausgebildeten Behälter umfasst, der an
seinem Mantel mindestens zwei entsprechend angeordnete
und mit kugelförmigem Anschlussteil versehene Stutzen
aufweist, wovon der eine mit einer Zuleitung und der
andere mit einer Ableitung zu verbinden ist.

Bei derartigen chemischen Laborreaktor-Anlagen ist der
Reaktorinhalt mittels eines geeigneten Wärmeträgermediums, vorzugsweise mittels einem flüssigen Medium rasch
aufzuheizen und anschliessend wieder rasch abzukühlen.
Zur Durchführung dieser Verfahrensschritte ist ein Reaktorgefäss aus Glas sowie ein zur Aufnahme des Reaktors
ausgebildeter, mit angeformten sowie einem Kugelschliff
versehenen Anschluss-Stutzen für die Zu- und Ableitung
versehener Behälter aus Glas vorgesehen. Die in zusammengebautem Zustand mit dem Behälter in Wirkverbindung
stehenden, mediumführenden Leitungen sowie Lagerelemente
sind aus Metall hergestellt, welche Metallteile gegenüber den verhältnismässig grosse Herstellungstoleranzen
aufweisenden Glasteilen wesentlich exakter herstellbar
sind.

Unter Berücksichtigung der unterschiedlichen Herstellungsbedingungen, der abweichenden Toleranzen sowie der
verschiedenen Ausdehnungskoeffizienten der einzelnen
Elemente (Glas-Metallverbindung) besteht die Möglichkeit, dass die bereits bei geringen Temperaturschwankungen auftretenden Spannungsbelastungen von den jewei-

- 2 -

ligen Verbindungselementen nicht ausreichend ausgeglichen und dadurch die abdichtend mit den Metallteilen in Wirkverbindung stehenden Glasteile beschädigt oder zerstört werden können.

Der Erfindung liegt die Aufgabe zugrunde, eine Anschlussvorrichtung zum Verbinden einer im wesentlichen ortsfesten, metallischen Zu- oder Ableitung mit den Stutzen eines nahezu ortsfesten Behälters aus Glas zu schaffen, welche Vorrichtung bei relativ schnell ändernden temperatur- und druckabhängigen Betriebsbedingungen (Temperatur-Regelung von etwa -30°C bis +200°C und Druck-Regelung von Vakuum bis etwa 1,5 bar) eine absolut dichte, zuverlässige Verbindung gewährleistet und die Zuleitung ausserdem Mittel zum turbulent aufsteigenden Einleiten eines Wärmeträgermediums in eine von dem Glasbehälter und einem Reaktor gebildete Ringkammer aufweist.

Erfindungsgemäss wird diese Aufgabe bei einer Vorrichtung der genannten Art dadurch gelöst, dass zwischen jedem Stutzen und einem ortsfest im Abstand zugeordneten Lagerelement für die Zu- und Ableitung ein Verbindungsorgan angeordnet ist, das axial verstellbar ausgebildet und auf der einen Seite mit einer Kugelpfanne abdichtend, schwenkbar mit dem Anschlussteil zusammenwirkt und auf der anderen Seite mit einem Flanschstück in dem Lagerelement befestigt ist, und dass in den Teilen der Zuleitung eine mit dem einen Ende in dem Flanschstück gelagerte und mit dem anderen Ende bis in einen vom Reaktor und Behälter gebildeten Zwischenraum reichende Düsenleitung angeordnet ist.

Die mit dem zwischen dem Stutzen und dem Lagerelement angeordneten Verbindungsorgan erreichten Vorteile bestehen darin, dass die an den aus verschiedenen Materialien mit unterschiedlichen Ausdehnungskoeffizienten bestehenden Teilen wirkenden Spannungen einerseits durch die schwenkbare Lagerung und andererseits durch die axiale Verstellbarkeit des beispielsweise mit einem Faltenbalg versehenen Verbindungsorgans eliminiert werden, und dass mit der integrierten Düsenleitung eine turbulent aufsteigende Einleitung des Wärmeträgermediums gewährleistet ist.

Weitere Merkmale der Erfindung ergeben sich aus der folgenden Beschreibung in Verbindung mit der Zeichnung und den Patentansprüchen.

Ein Ausführungsbeispiel der Erfindung wird nachstehend anhand der Zeichnung beschrieben. Es zeigt:

Fig. 1 ein in Draufsicht und teilweise im Schnitt dargestelltes Teilstück einer chemischen Laborreaktor-Anlage mit einer Zuleitung für das Wärmeträgermedium,

Fig. 2 die in grösserem Massstab und als Schnitt-Sprengansicht dargestellte Zuleitung gemäss Fig.1, und

Fig. 3 eine teilweise im Schnitt dargestellte Düsenleitung für das einzuleitende Medium.

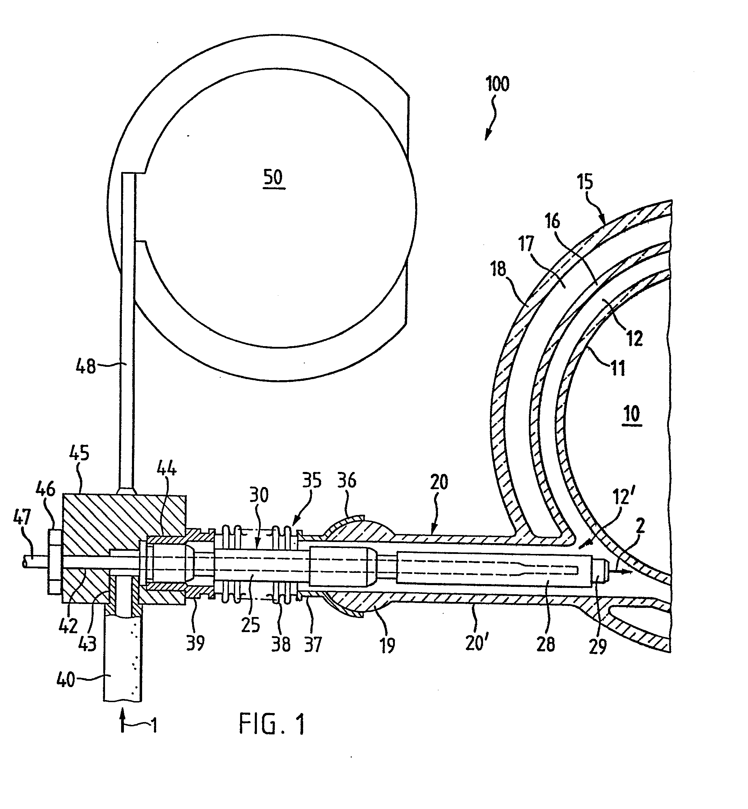

In Fig.1 ist eine mit 100 bezeichnete Laborreaktor-Anlage in Draufsicht dargestellt und man erkennt einen im Schnitt dargestellten Reaktor 10 und Behälter 15 sowie ein im Abstand dazu angeordnetes, schematisch dargestelltes Geräteteil 50. Der zur Aufnahme des Reaktors 10 ausgebildete Behälter 15 ist mit mindestens zwei in axialer Richtung des Behältermantels im Abstand zueinander angeordneten Stutzen versehen, wovon der eine, untere Stutzen mit einer Zuleitung und der andere, obere Stutzen mit einer Ableitung in Wirkverbindung steht. Derartige Laborreaktor-Anlagen sind zur Durchführung von Versuchen chemischer Reaktionen mit unterschiedlichen Medien oder Stoffen vorgesehen, bei welchen Anlagen der jeweilige Reaktorinhalt mittels eines geeigneten Wärmeträgermediums rasch aufzuheizen und ebenso rasch wieder abzukühlen ist. Das Medium wird hierbei durch die Zuleitung in eine vom Behälter 15 und Reaktor 10 gebildete Ringkammer 12 eingeführt und durch die nicht dargestellte Ableitung wieder abgeführt.

Fig.1 zeigt ein Teilstück des Reaktors 10 aus Glas, welcher von dem doppelwandig ausgebildeten Behälter 15 aus Glas umgeben ist. Zwischen der den Behältermantel bildenden Innenwand 16 und Aussenwand 18 des Behälters 15 ist ein kreisringförmiger Vakuumraum 17 vorgesehen. Weiterhin ist zwischen der Wand 11 des Reaktors 10 und der Innenwand 16 des Behälters 15 die Ringkammer 12 angeordnet, in welche an vorgegebener Stelle, wie in Fig.1 dargestellt, das Medium in eine im Behältermantel 16,18 vorgesehene Oeffnung 12' eingeführt wird. Der erste Stutzen 20 für die Zuleitung sowie der zweite, nicht näher dargestellte und im wesentlichen analog ausgebildete Stutzen für die Ableitung sind Bestandteile des Behälters 15 und haben je ein mit dem einen Ende an den Behältermantel 16,18 angeformtes Rohrteil 20' sowie ein am anderen Ende angeformtes, kugelförmig ausgebildetes Anschlussteil 19.

An dem ortsfest im Abstand zu dem Behälter 15 und Reaktor 10 angeordneten Geräteteil 50 ist mit nicht näher dargestellten Mitteln ein Tragarm 48 befestigt, welcher an dem einen Ende als Lagerelement 45 ausgebildet ist. Auf der dem Stutzen 20 zugewandten Seite ist in dem Lagerelement 45 eine erste Ausnehmung 44 vorgesehen, welche zur Aufnahme eines auf der anderen Seite mit dem Stutzen 20 in Wirkverbindung stehenden Verbindungsorgans 35 dient. Das in bezug auf die Teile 45 und 19,20 axial verstellbar ausgebildete Verbindungsorgan 35 ist auf der der Ausnehmung 44 zugewandten Seite mit einem Flanschstück 39 und auf der dem Anschlussteil 19 zugewandten Seite mit einem Rohrteil 37 mit angeformter Kugelpfanne 36 versehen. Zwischen dem Flanschstück 39 und dem Rohrteil 37 ist bei dem dargestellten Ausführungsbeispiel. ein Faltenbalg 38 angeordnet, welcher mit nicht näher dargestellten Mitteln mit den Teilen 37,39 fest verbunden ist.

In zusammengebautem Zustand ist das auf der einen Seite mit dem Lagerelement 45 wirkverbundene Verbindungsorgan 35 mittels nicht dargestellter Klammern oder dergleichen an dem Anschlussteil 19 des jeweiligen Stutzens 20 der Zu- oder Ableitung des Behälters 15 befestigt. Die Befestigung mittels der Klammern ist vorzugsweise so ausgebildet, dass keine weiteren Hilfsmittel zum Lösen erforderlich sind und somit ein rasches Entfernen des Behälters 15 und Reaktors 10 zwecks Reinigung oder Austausch gewährleistet ist.

Die axiale Verstellbarkeit des Verbindungsorgans 35 kann auch durch ein mit den Teilen 37,39 wirkverbundenes, teleskopartig wirkendes Element (nicht dargestellt) erreicht werden.

Das Verbindungsorgan 35 ist an dem einen Ende mit dem Flanschstück 39 in Fig.1 in nicht näher dargestellter Weise in der Ausnehmung 44 des Lagerelements 45 befestigt und steht mit dem anderen Ende mittels der Kugelpfanne 36 mit dem kugelförmigen Anschlussteil 19 des Stutzens 20 abdichtend, schwenkbar in Wirkverbindung. Mit dem Verbindungsorgan 35 wird im wesentlichen ein Dehnungs- und Bewegungsausgleich zwischen dem ortsfesten, metallischen Lagerelement 45 des Geräteteils 50 und dem von relativ raschen Temperaturänderungen beeinflussten Stutzen 20 des Behälters 15 erreicht.

Weiterhin erkennt man in Fig.1 eine koaxial in dem Stutzen 20 und dem Verbindungsorgan 35 angeordnete Düsenleitung 30, welche auf der einen Seite in dem Flanschstück 39 gelagert und auf der anderen Seite mit einer in die Ringkammer 12 einmündenden Düse 29 versehen ist. Durch eine im Lagerelement 45 vorgesehene Bohrung 42 ist ferner ein Thermoelement 47 in die Düsenleitung 30 eingeführt. Das im Bereich der Düse 29 mit einem nicht dargestellten Temperaturfühler versehene Thermoelement 47 ist vorzugsweise flexibel an die Bewegung der Düsenleitung 30 anpassbar ausgebildet und mit geeigneten Mitteln 46 an dem Lagerelement 45 befestigt und reicht vorzugsweise bis in den vorderen Bereich der Düsenleitung 30. Eine zweite, in dem Lagerelement 45 angeordnete Ausnehmung 43 ist für eine mit nicht dargestellten Mitteln in dem Lagerelement befestigte Leitung 40 vorgesehen.

Zum raschen Aufheizen und Abkühlen des Reaktorinhalts wird mit Pfeilrichtung 1 (Fig.1) das Medium durch die Leitung 40 und Düsenleitung 30 sowie von der Düse 29 in Pfeilrichtung 2 feinwirbelig und spiralförmig zwischen der Behälterinnenwand 16 und der Reaktorwand 11 turbulent aufsteigend in die Ringkammer 12 eingeführt und durch die nicht dargestellte Ableitung wieder abgeführt.

An dieser Stelle sei darauf hingewiesen, dass die im oberen Bereich des Behälters 15 angeordnete Ableitung wie die Zuleitung einen angeformten Stutzen, ein Verbindungsorgan sowie ein Lagerelement umfasst, wobei die Düsenleitung 30 sowie das Thermoelement 47 für die Ableitung nicht erforderlich sind.

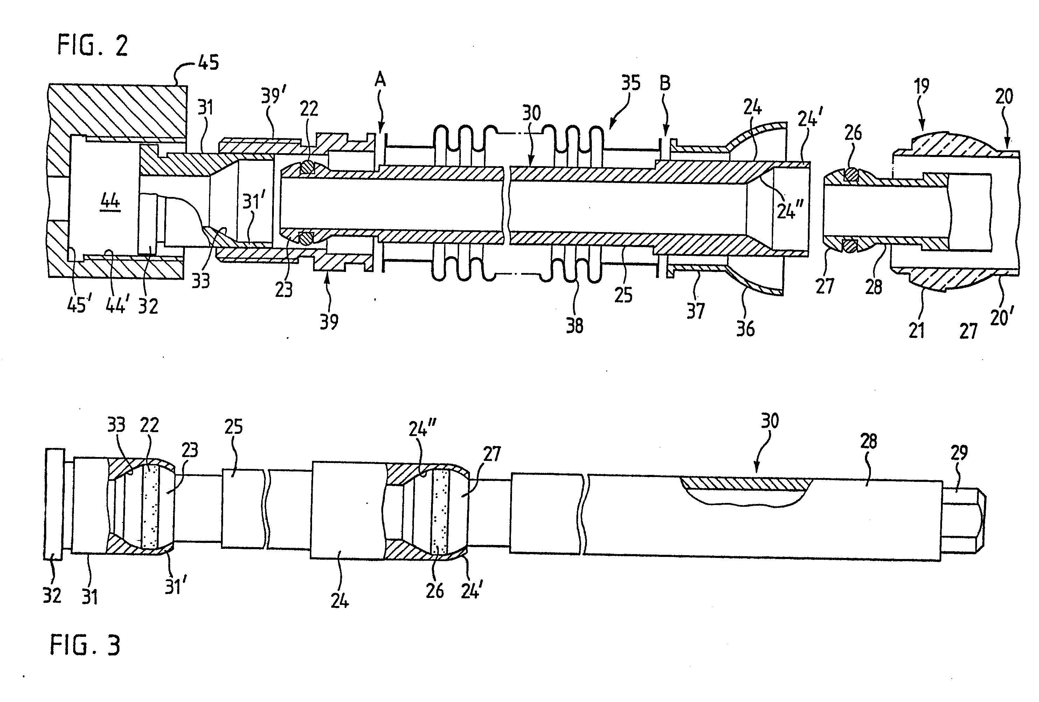

Fig.2 zeigt in grösserem Massstab und im Schnitt die als Sprengzeichnung dargestellte Zuleitung und man erkennt ein Teilstück des Stutzens 20 sowie das im Abstand dazu angeordnete Lagerelement 45 des in Fig.2 nicht dargestellten Geräteteils 50. Zwischen den Teilen 45 und 20 ist das Verbindungsorgan 35 angeordnet, welches das Flanschstück 39, den Faltenbalg 38 sowie das Rohrteil 37 mit angeformter Kugelpfanne 36 umfasst. Das kugelförmige Anschlussteil 19 ist mit einem Kugelschliff 21 versehen und ermöglicht einen schwenkbaren, flüssigkeitsdichten Anschluss mit der entsprechend ausgebildeten Kugelpfanne 36. Das Flanschstück 39 wird an der mit A bezeichneten Stelle und das Rohrteil 37 an der mit B bezeichneten Stelle mit dem Faltenbalg 38 zusammengeschweisst, so dass die Teile 37,38 und 39 eine Baueinheit bilden. Das als Baueinheit ausgebildete Verbindungsorgan 35 wird auf der einen Seite mit dem mit einem Aussengewinde 39' versehenen Flanschstück 39 in das mit einem Innengewinde 44' versehene Lagerelement 45 eingeschraubt und steht im zusammengebauten Zustand auf der anderen Seite mittels der Kugelpfanne 36 mit dem Anschlussteil 19 des Stutzens 20 in Wirkverbindung.

In dem Verbindungsorgan 35 und dem Stutzen 20 ist die mehrteilige, aus der Düse 29, einer ersten Gelenkhülse 28, einer zweiten Gelenkhülse 25 und einem Gelenkhalter 31 gebildete Düsenleitung 30 angeordnet. Die Düsenleitung 30 ist ebenfalls als eine Baueinheit ausgebildet, welche beim Einschrauben des Flanschstückes 39 mit dem Gelenkhalter 31 koaxial zentriert in die Ausnehmung 44 eingeführt und in der Endstellung (Fig.1) mit einem ringförmigen Anschlag 32 an der mit 45' bezeichneten Anlagefläche des Lagerelements 45 fest anliegt.

Wie in Fig.3 dargestellt, ist die erste Gelenkhülse 28 mit einem kugelförmigen und mit einer Dichtung 26 versehenen Kopfstück 27 in einer Kugelpfanne 24" eines ersten Gelenkhalters 24 schwenkbar gelagert und durch die gebördelten Enden 24' gehalten. Das Kopfstück 27 ist an der ersten Gelenkhülse 28 und der erste Gelenkhalter 24 an der zweiten Gelenkhülse 25 angeformt. Die zweite Gelenkhülse 25 ist ebenfalls mit einem kugelförmigen und mit einer Dichtung 22 versehenen Kopfstück 23 in einer Kugelpfanne 33 des zweiten Gelenkhalters 31 schwenkbar gelagert und wird durch die gebördelten Enden 31' gehalten.

Die an zwei im Abstand zueinander angeordneten Stellen schwenkbar ausgebildete und mit dem zweiten Gelenkhalter 31 im Lagerelement 45 sowie im Flanschstück 39 koaxial angeordnete und gelagerte Düsenleitung 30 gewährleistet eine exakte Einstellung der am vorderen Ende angeordneten, das Medium in die Ringkammer 12 einleitenden Düse 29 in bezug auf die Oeffnung 12'.

Patentansprüche:

1. Anschlussvorrichtung zum Ein- und Ableiten eines Wärmeträgermediums in eine Laborreaktor-Anlage (100), welche Anlage einen zur Aufnahme eines Reaktors (10) ausgebildeten Behälter (15) umfasst, der an seinem Mantel (16,18) mindestens zwei entsprechend angeordnete und mit kugelförmigem Anschlussteil (19) versehene Stutzen (20) aufweist, wovon der eine mit einer Zuleitung und der andere mit einer Ableitung zu verbinden ist, dadurch gekennzeichnet, dass zwischen jedem Stutzen (20) und einem ortsfest im Abstand zugeordneten Lagerelement (45) für die Zu- und Ableitung ein Verbindungsorgan (35) angeordnet ist, das axial verstellbar ausgebildet und auf der einen Seite mit einer Kugelpfanne (36) abdichtend, schwenkbar mit dem Anschlussteil (19) zusammenwirkt und auf der anderen Seite mit einem Flanschstück (39) in dem Lagerelement (45) befestigt ist, und dass in den Teilen (20,35) der Zuleitung eine mit dem einen Ende in dem Flanschstück (39) gelagerte und mit dem anderen Ende bis in einen vom Reaktor (10) und Behälter (15) gebildeten Zwischenraum (12) reichende Düsenleitung (30) angeordnet ist.

2. Anschlussvorrichtung nach Anspruch 1, dadurch gekennzeichnet, dass das Verbindungsorgan (35) für die axiale Verstellbarkeit mit einem Faltenbalg (38) oder einem Teleskoprohr versehen ist.

3. Anschlussvorrichtung nach Anspruch 1, dadurch gekennzeichnet, dass die in dem Flanschstück (39) gelagerte und am vorderen Ende mit einer Düse 29 versehene Düsenleitung (30) in bezug auf eine Oeffnung (12')
des Zwischenraumes (12) einstellbar ist und mindestens an einer Stelle mit einem Kugelgelenk (23,33)
schwenkbar ausgebildet ist.

4. Anschlussvorrichtung nach Anspruch 1 und 3, dadurch
gekennzeichnet, dass die Düsenleitung (30) in bezug
auf die Oeffnung (12') des Zwischenraumes (12) an
zwei Stellen mit einem Kugelgelenk (23,33; 27,24")
schwenkbar ausgebildet ist.

5. Anschlussvorrichtung nach Anspruch 1, dadurch gekennzeichnet, dass in der Düsenleitung (30) ein bis annähernd zur Düse (29) reichendes, im vorderen Bereich
mit einem Temperaturfühler versehenes Thermoelement
(47) angeordnet ist.

FIG. 1

FIG. 2

FIG. 3

0187915

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | LABORATORIUM GLASWERK, März 1970, SA Le Pyrex Belge N.V., Brussel, BE. * Seiten 6,49 * | 1 | B 01 L  3/00 |
| A | EP-A-0 040 268  (BBC BROWN, BOVERI & CIE.) * Seite 1, Zeilen 1-13; Seite 4, Zeile 27 - Seite 5, Zeile 15 * | 1,2 | |
| A | BE-A- 806 738  (I.R.E.) * Seite 3, Zeile 4 - Seite 5, Zeile 12 * | 1,3 | |
| A | DE-C- 337 119  (KÖHLER) | | |
| A | DE-C- 579 437  (STINTZING) | | |

RECHERCHIERTE SACHGEBIETE (Int Cl.4)

B 01 L
F 16 L

Der vorliegende Recherchenbericht wurde für alle Patentansprüche erstellt.

| Recherchenort | Abschlußdatum der Recherche | Prüfer |
|---|---|---|
| DEN HAAG | 19-12-1985 | VAN OORSCHOT J.W.M. |